# EUROPEAN PATENT APPLICATION

(11) **EP 2 938 092 A1**
(43) Date of publication of application: **28.10.2015**
(21) Application number: 13864408.3
(22) Date of filing: 31.10.2013
(51) Int. Cl.: H04Q 9/00, H04M 1/00, H04N 5/00

(54) **COMMUNICATION DEVICE, COMMUNICATION METHOD, COMMUNICATION SYSTEM, AND COMPUTER PROGRAM**

(30) Priority: 20.12.2012 JP 2012278712
(71) Applicant: Sony Corporation, Tokyo 108-0075 (JP)
(72) Inventor: SUGITA, Naoki, Tokyo 108-0075 (JP); SHIROTA, Kanahiro, Tokyo 108-0075 (JP); SATOH, Yoshinori, Tokyo 108-0075 (JP); TSURUMOTO, Takashi, Tokyo 108-0075 (JP)
(74) Representative: Witte, Weller & Partner Patentanwälte mbB
(86) International application number: PCT/JP2013/079513
(87) International publication number: WO 2014/097755

(57) **Abstract**

A remote controller 200 serves as an intermediator relaying between a portable terminal 100 having a reader/writer 104 mounted thereon and a main device 300. After recognizing a transponder 204, the reader/writer 104 automatically performs a sequence of reading/writing NDEF (NFC Data Exchange Format) data in the transponder 204. In the remote controller 200, command data is received by the transponder 204 from the reader/writer 104. Then, the control unit 201 transmits the command data to the main device 300 through wireless communication by the wireless communication unit 205.

## Description

### TECHNICAL FIELD

The technology disclosed in the present specification relates to an information processing apparatus which executes various types of applications and an information processing method, a communication apparatus which bidirectionally communicates with devices (such as an information processing apparatus and a television) in a house and a communication method, a communication system, and a computer program.

### BACKGROUND ART

Recently, a smart phone, a tablet, a portable music reproducing device, and a multifunction terminal such as a game machine have been rapidly come into wide use. Such types of terminals, for example, are operated in an operating system such as Android (registered trademark) and installed with a network connection function, and can perform various processes by sequentially downloading necessary applications (for example, see Patent Document 1).

On the other hand, the television has infiltrated at home for a long time. There is a demand for a link between the multifunction terminal and the television by users of the multifunction terminal. For example, the users hope for transmitting a command from the multifunction terminal to the television, performing an application (performed on the multifunction terminal) also in the television, and continuously viewing contents streamed and reproduced on the multifunction terminal using a large screen of the television.

### CITATION LIST

### PATENT DOCUMENT

Patent Document 1: JP 2012-185745 A

### SUMMARY OF THE INVENTION

### PROBLEMS TO BE SOLVED BY THE INVENTION

An object of the technology disclosed in the present specification is to provide an information processing apparatus, an information processing method, and a computer program which are excellent in that various applications can be performed, and communicate with devices in a house, such as television, through a communication apparatus such as a remote controller.

Another obj ect of the technology disclosed in the present specification is to provide a communication apparatus, a communication method, a communication system, and a computer program which are excellent in that the information processing apparatus at hand can be used through devices in a house such as the information processing apparatus and the television.

### SOLUTIONS TO PROBLEMS

The present application has been made in view of the above problems, and the technology described in claim 1 is a communication apparatus including:
a transponder configured to communicate with a reader/writer which is mounted on an information processing apparatus;
a main communication unit configured to communicate with a main device; and
a control unit configured to cause the transponder to transmit a command, the command being transmitted from the reader/writer, from the main communication unit to the main device, and set a command response received from the main device by the main communication unit to the transponder.

According to the technology described in claim 2 of the present application, in the communication apparatus according to claim 1, the control unit is configured to instruct the main communication unit to be connected to the main device in response to the transponder which detects a carrier wave from the reader/writer.

According to the technology described in claim 3 of the present application, in the communication apparatus according to claim 1, the control unit is configured to instruct the transponder to make a response to the reader/writer at a time when the connection with the main device is established.

According to the technology described in claim 4 of the present application, in the communication apparatus according to claim 1, the control unit is configured to set information on a connection state with respect to the main device or an activation state of the main device to the transponder.

According to the technology described in claim 5 of the present application, in the communication apparatus according to claim 1, the control unit is configured to set URL information of a specific site which discloses information on connection with the main device or a failure generated in the main device to the transponder.

Further, the technology described in claim 6 of the present application is a communication method including:
transmitting a command, the command being transmitted from a reader/writer mounted on an information processing apparatus to a transponder, to a main device through a main body communication; and
setting a command response, the command response being received from the main device through the main body communication, to the transponder.

Further, the technology described in claim 7 of the present application is a communication system including:
an information terminal configured to include a reader/writer;
a main device; and
a remote controller configured to be connected to the main device through a main body communication, and include a transponder which communicates with the reader/writer.

Note that the "system" described above is an entity in which a plurality of apparatuses (or functional modules which realize specific functions) are logically assembled, and it does not matter whether the respective apparatuses and the functional modules are provided in one housing.

Further, the technology described in claim 8 of the present application is a computer-readable program for causing a computer to execute:
transmitting a command, the command being transmitted from a reader/writer mounted on an information processing apparatus to a transponder, to a main device through a main body communication; and
setting a command response, the command response being received from the main device through the main body communication, to the transponder.

A computer program according to claim 8 of the present application is defined as a computer program described in a computer-readable format to realize a predetermined process on the computer. In other words, when the computer program according to claim 8 of the present application is installed in the computer, a cooperative operation is exhibited in the computer, and thus it is possible to achieve the same operational advantage as that of the communication apparatus according to claim 1 of the present application.

### EFFECTS OF THE INVENTION

According to the technology disclosed in the present specification, it is possible to provide an information processing apparatus, an information processing method, and a computer program which are excellent in that various applications can be performed, and communicate with devices in a house, such as television, through a communication apparatus such as a remote controller.

In addition, according to the technology disclosed in the present specification, it is possible to provide a communication apparatus, a communication method, a communication system, and a computer program which are excellent in that the information processing apparatus at hand can be used through devices in a house such as the information processing apparatus and the television.

Other objects, features, and advantages of the technology disclosed in the present specification will become clear through the detailed description based on the embodiments and the accompanying drawings.

### BRIEF DESCRIPTION OF DRAWINGS

Fig. 1 is a diagram illustrating the outline of a communication system 1 according to an embodiment of a technology disclosed in the present specification.
Fig. 2 is a diagram schematically illustrating inner configurations of a portable terminal 100, a remote controller 200, and a main device 300.
Fig. 3 is a diagram mainly illustrating an exemplary configuration of an inductively coupled portion of an electromagnetic induction type of non-contact communication system which includes a reader/writer 104 and a transponder 204.
Fig. 4 is a diagram illustrating an exemplary communication sequence which is performed between the portable terminal 100, the remote controller 200, and the main device 300 in the communication system 1.
Fig. 5 is a diagram illustrating a status in which a content of error information is displayed in a screen of the portable terminal 100 which received the error to prompt a user's operation.
Fig. 6 is a diagram illustrating a status in which a content of error information is displayed in the screen of the portable terminal 100 received the error to prompt a user's operation.
Fig. 7 is a diagram illustrating of an exemplary configuration of the communication system in which a user selects a control target device amongmain devices 300-1, 300-2, and so on using the remote controller 200 to make wireless connection.
Fig. 8 is a flowchart illustratingaprocessingprocedure performed by the portable terminal 100.
Fig. 9 is a flowchart illustratingaprocessingprocedure performed by the remote controller 200.
Fig. 10 is a flowchart illustrating the processing procedure performed by the portable terminal 100.
Fig. 11 is a flowchart illustrating the processing procedure performed by the remote controller 200.
Fig. 12 is a flowchart illustrating the processing procedure performed by the remote controller 200.
Fig. 13 is a flowchart illustrating the processing procedure performed by the portable terminal 100.
Fig. 14 is a flowchart illustrating the processing procedure performed by the remote controller 200.
Fig. 15 is a flowchart illustrating the processing procedure performed by the remote controller 200.
Fig. 16 is a flowchart illustrating the processing procedure performed by the remote controller 200.

### MODE FOR CARRYING OUT THE INVENTION

Hereinafter, embodiments of the technology disclosed in the present specification will be described in detail with reference to the drawings.

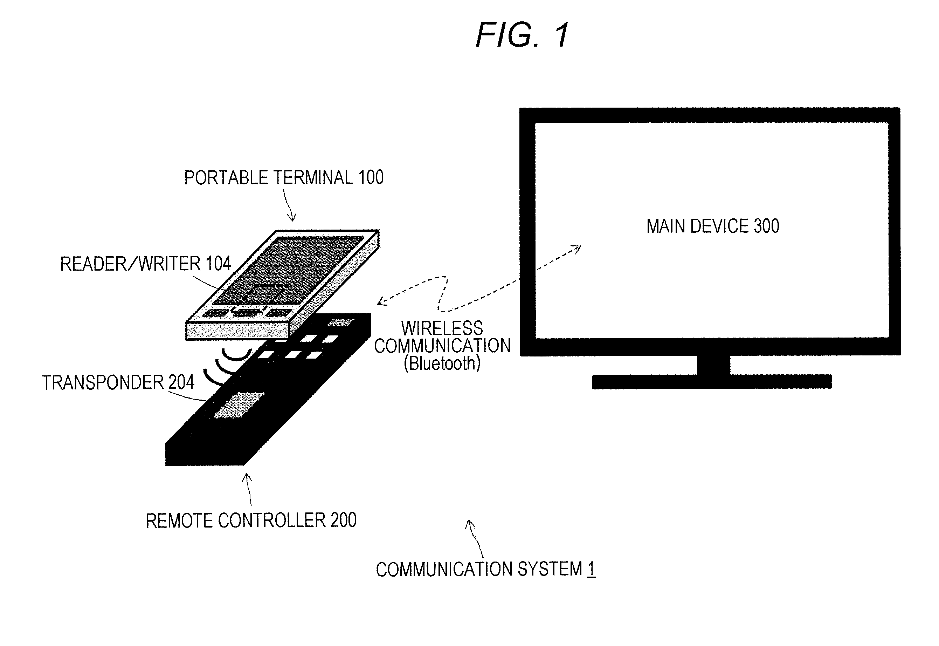

Fig. 1 illustrates the outline of a communication system 1 according to an embodiment of the technology disclosed in the present specification. The illustrated communication system 1 includes a portable terminal 100 which is carried by a user, a main device 300 such as a television, and a remote controller 200 which remotely controls the main device.

The portable terminal 100 and the remote controller 200 can make bidirectional communication using a non-contact communication system. The non-contact communication system generally includes a transponder and a reader/writer (RW) which reads and writes information with respect to the transponder. In this embodiment, the portable terminal 100 includes a reader/writer 104 mounted thereon, and the remote controller 200 includes a transponder 204 mounted thereon. The portable terminal 100 is held up over the remote controller 200 so that non-contact communication is performed between the reader/writer 104 and the transponder 204.

In addition, the remote controller 200 and the main device 300 are connected to each other using wireless communication such as Bluetooth (registered trademark). However, the communication means is not necessarily limited to Bluetooth (registered trademark) for the realization of the technology disclosed in the present specification, and other wireless communication means such as Wi-Fi and a wired communication means may be used.

Further, for the realization of the communication with the portable terminal 100 having the reader/writer 104 mounted thereon, it may be considered a design in which a transponder function is mounted on the main device 300. In this case, it is necessary for the user to go to the main device 300 and hold up the user' s portable terminal 100 over the main device. In this regard, with the configuration in which the transponder 204 is mounted on the remote controller 200 in this embodiment, even without going up to the main device 300, the same function can be realized by holding up the user's portable terminal 100 over the remote controller 200 at hand.

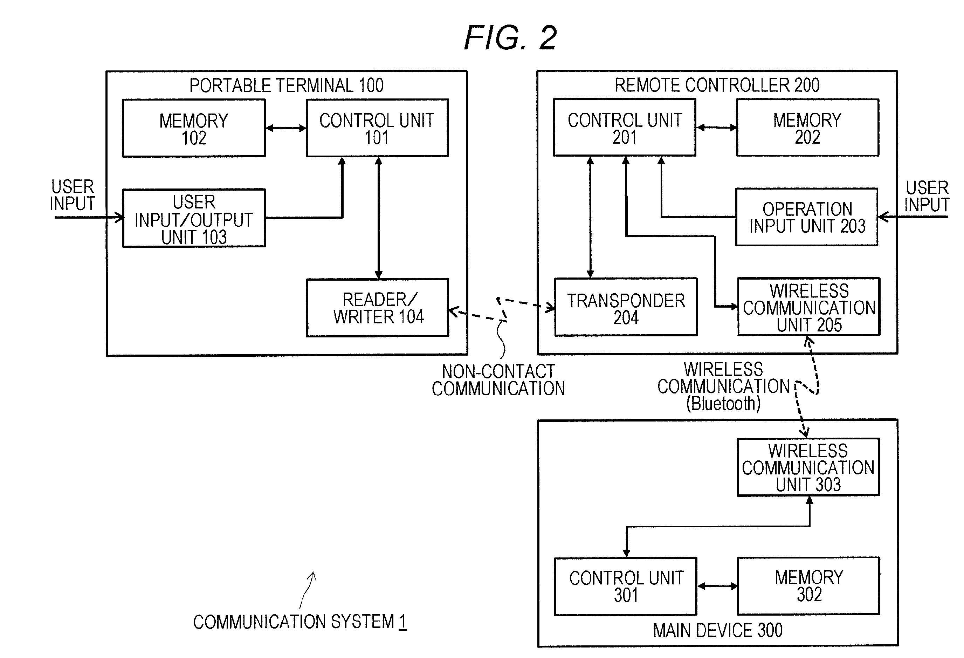

Fig. 2 schematically illustrates the inner configurations of the portable terminal 100, the remote controller 200, and the main device 300. In this case, functional blocks having no direct relation with the technology disclosed in the present specification are appropriately omitted in the drawing.

The portable terminal 100 includes a control unit 101, a memory 102, a user input/output unit 103, and the reader/writer 104 for the non-contact communication.

The control unit 101 executes various types of programs using the memory 102 as a work area, and integrally controls the operations of the respective units in the portable terminal 100.

The user input/output unit 103 includes an output unit such as a display screen to display information, and an input unit such as a touch panel which receives an input from the user.

The reader/writer 104 is operated in conformity to a predetermined non-contact communication standard (to be describedbelow), and reads and writes information with respect to the transponder 204 of the remote controller 200 to realize the bidirectional communication with the remote controller 200.

The remote controller 200 includes a control unit 201, a memory 202, an operation input unit 203, the transponder 204 for the non-contact communication, and a wireless communication unit 205.

The control unit 201 executes various types of programs using the memory 202 as the work area, and integrally controls the operations of the respective units in the remote controller 200.

The operation input unit 203 receives an input from the user through a device including a cross key, numeric keys, and other buttons.

The transponder 204 is operated in conformity to the predetermined non-contact communication standard (to be described below), and transfers data received from the reader/writer 104 of the portable terminal 100 to the control unit 201. In addition, when the control unit 201 generates response data to the portable terminal 100 (the reader/writer 104) and sets the response data to the transponder 204, the transponder 204 transmits the data to the reader/writer 104. However, a data format between the control unit 201 and the transponder 204 is not necessarily equal to that between the reader/writer 104 and the transponder 204.

The wireless communication unit 205 performs the communication in conformity to Bluetooth (registered trademark) or other communication standards.

When information addressed to the main device 300 is received by the transponder 204 from the portable terminal 100, the control unit 201 transmits the information from the wireless communication unit 205 to the main device 300. In addition, when the information addressed to the portable terminal 100 is received by the wireless communication unit 205 from the main device 300, the control unit 201 writes the information in the transponder 204. The portable terminal 100 can read the information which is written in the transponder 204 and addressed to its own terminal using the reader/writer 104.

Further, in the memory 202, when wireless connection with the main device 300 is failed and when the main device 300 does not enter a desired state, URL data of a smart poster format corresponding to each casemaybe stored (to be described below).

The main device 300 includes a control unit 301, a memory 302, and a wireless communication unit 303.

The control unit 301 executes various types of programs using the memory 302 as the work area, and integrally controls the operations of the respective units in the main device 300. For example, in a case where the main device 300 is a television, the control unit 301 controls image and audio outputs of a broadcasting signal received from a selected channel according to a channel selection action from the remote controller 200.

The wireless communication unit 303 performs the communication in conformity to Bluetooth (registered trademark) or other communication standards. The control unit 301 can perform an information exchange with the remote controller 200 using the wireless communication unit 303.

As described above, the non-contact communication is used in the information exchange between the portable terminal 100 (the reader/writer 104) and the remote controller 200 (the transponder 204). As an example of the non-contact communication, the NFC (Near Field Communication) standard developed by Sony Corporation and Koninklijke Philips N.V. can be exemplified. The NFC system originally succeeds "FeliCa" of Sony Corporation and "Mifare" of Koninklijke Philips N.V. which are widely used as a non-contact IC card, and it is possible to realize a bidirectional communication using 13.56 MHz band which is a near field type (for example, about 10 cm) and a non-contact type in an electromagnetic induction manner.

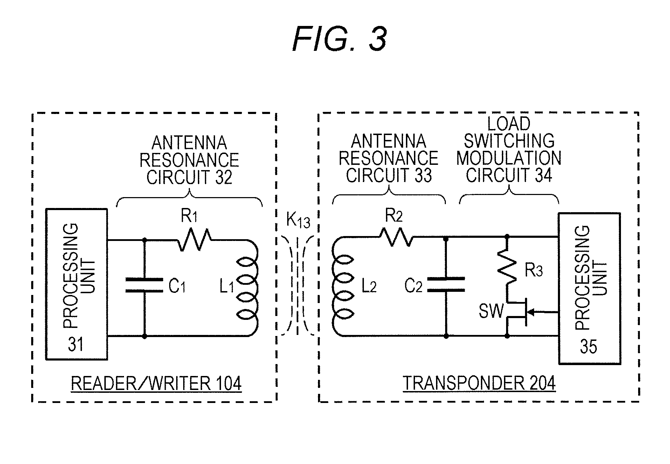

When the reader/writer 104 and the transponder 204 are held up, the non-contact communication starts. Fig. 3 illustrates an exemplary configuration of an inductively coupled portion of an electromagnetic induction type of non-contact communication system which includes the reader/writer 104 and the transponder 204. Antenna resonance circuits 31 and 32 respectively included in the reader/writer 104 and the transponder 204 are electromagnetically coupled to each other to transfer information signals.

The reader/writer 104 includes a processor 31 and the antenna resonance circuit 32. The antenna resonance circuit 32 includes a resistor R₁, a capacitor C₁, and a coil L₁. A specific resonance frequency of the antenna resonance circuit 32 is set to a predetermined value in advance by a capacitance of the capacitor C₁ and an inductance of the coil L₁. In the reader/writer 104, the information signal generated by the processor 31 is transmitted from the antenna resonance circuit 32 to the transponder 204, and the information signal from the transponder 204 is received by the antenna resonance circuit 32 and supplied to the processor 31.

On the other hand, the transponder 204 includes an antenna resonance circuit 33, a load switching modulation circuit 34, and a processor 35. The antenna resonance circuit 33 includes a resistor R₂, a capacitor C₂, and a coil L₂. A resonance frequency of the antenna resonance circuit 33 is set to a predetermined value in advance by a capacitance of the capacitor C₂ and an inductance of the coil L₂. In the transponder 204, the information signal generated by the processor 35 is transmitted from the antenna resonance circuit 33 to the reader/writer 104, and the information signal from the reader/writer 104 is received by the antenna resonance circuit 33 and supplied to the processor 35.

An LC resonance circuit is composed of the primary coil L₁ of the reader/writer 104 and the secondary coil L₂ of the transponder 204, and data communication is performed through the coil path by the magnetic coupling of these two coils L₁ and L₂.

Specifically, in the reader/writer 104, the processor 31 modifies a width of a magnetic field generated by the primary coil L₁ to transmit the data. In the transponder 204, the processor 35 detects the signal and reads the transmitted data.

In addition, in the transponder 204, the load switching modulation circuit 34 can perform load switching (LS) of the secondary coil L₂, modulate the amplitude of a non-modulated carrier wave sent from the reader/writer 104, and transmit the data to the reader/writer 104.

Resonance frequencies of the respective coils L₁ and L₂ of the reader/writer 104 and the transponder 204 are adjusted to be a carrier wave frequency so as to be resonated, so that an appropriated communication distance can be set between the transponder 204 and the reader/writer 104.

A processing flow realized in the communication system 1 according to this embodiment will be described with reference to Figs. 1 and 2 again.

The portable terminal 100 is held up over the remote controller 200, so that the reader/writer 104 recognizes the transponder 204 in the remote controller 200, and the non-contact communication is performed between the reader/writer 104 and the transponder 204.

After recognizing the transponder 204, the reader/writer 104 automatically performs a sequence of reading/writing NDEF (NFC Data Exchange Format) data in the transponder 204.

In the remote controller 200, command data is received by the transponder 204 from the reader/writer 104. Then, the control unit 201 transmits the command data to the main device 300 through wireless communication by the wireless communication unit 205.

In the main device 300, when the response data is generated with respect to a command received by the wireless communication unit 303, the control unit 301 sends the response data to the remote controller 200 through the wireless communication by the wireless communication unit 303. In the remote controller 200, the response data received by the control unit 201 is set to the transponder 204. However, the data format of the response data set to the transponder 204 is not necessarily equal to the data format to be transmitted or received through the wireless communication. The portable terminal 100 can read the response data set to the transponder 204 by the reader/writer 104.

In the above processing flow, the remote controller 200 serves as an intermediator relaying between the portable terminal 100 having the reader/writer 104 mounted thereon and the main device 300, and the control unit 301 of the main device 300 actually processes the command from the portable terminal 100.

In the communication system 1 according to this embodiment, a content communicated with the portable terminal 100 can be changed according to a state of the main device 300. Therefore, it is possible to provide more information to the portable terminal 100 with a higher accuracy.

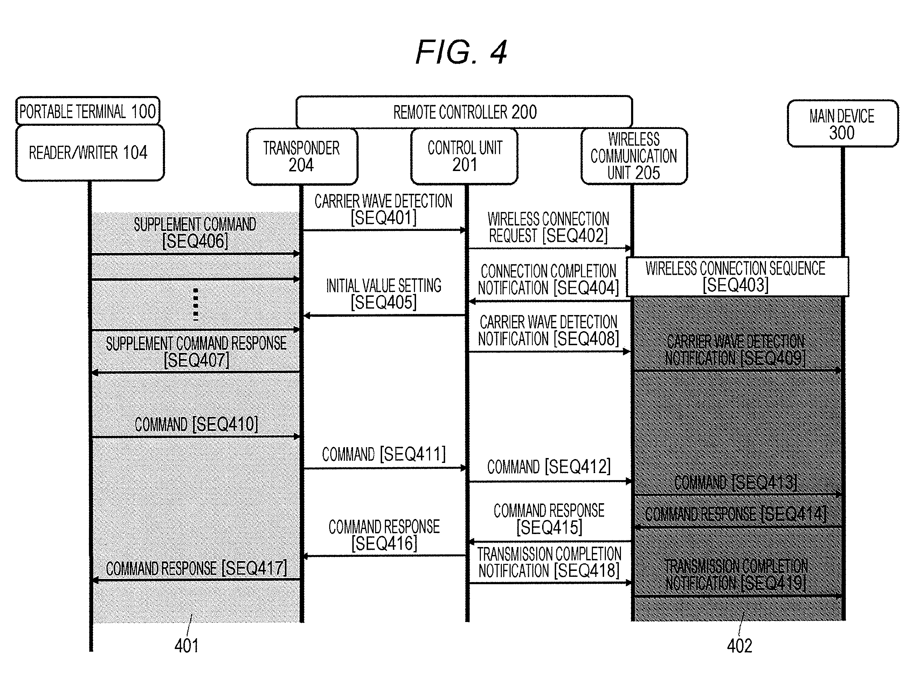

Fig. 4 illustrates an exemplary communication sequence which is performed between the portable terminal 100, the remote controller 200, and the main device 300 in the communication system 1 according to this embodiment.

The reader/writer 104 of the portable terminal 100 intermittently sends out the carrier wave, and outputs a supplement command. In the drawing, a light-grayed section 401 shows a section where the carrier wave is sent from the reader/writer 104.

When the user holds up the portable terminal 100 over the remote controller 200, the carrier wave also reaches the transponder 204 of the remote controller 200. The control unit 201 instructs the wireless communication unit 205 to be wirelessly connected with the main device 300 (SEQ402) in response to the transponder 204 which detects the carrier wave (SEQ401). In response to the instruction of the wireless connection, the wireless communication unit 205 performs a predetermined connection sequence (SEQ403) in conformity to a communication standard such as Bluetooth (registered trademark) with respect to the wireless communication unit 303 of the main device 300, and then establishes the wireless connection. In the drawing, a dark-grayed section 402 shows a section where the wireless connection is established.

When the wireless connection is established with respect to the main device 300, the wireless communication unit 205 notifies a connection completion to the control unit 201 (SEQ404). The control unit 201 sets an initial value parameter to the transponder 204 at the time when the wireless connection is completed (SEQ405). The initial value parameter is assumed to include information necessary for the reader/writer 104 to recognize the transponder 204 (and the remote controller 200).

The reader/writer 104 repeatedly sends out the supplement command at a predetermined timing (for example, in a period at a predetermined interval) (SEQ406). An example of the supplement command is a polling command. The transponder 204 set by the initial value parameter can send back a supplement command response to the received supplement command (SEQ407). Further, it is assumed that the transponder 204 before set by initial value parameter is not possible to send back the supplement command response.

Then, the reader/writer 104 can recognize the transponder 204 (and the remote controller 200) by receiving the supplement command response from the transponder 204. As a result, the non-contact communication connection is established between the reader/writer104 and the transponder 204. After recognizing the transponder 204, the reader/writer 104 may send out the carrier wave not intermittently but continuously.

In addition, after setting the initial value to the transponder 204, the control unit 201 instructs the wireless communication unit 205 to notify the detection of the carrier wave to the main device 300 (SEQ408). The wireless communication unit 205 notifies the detection of the carrier wave to the main device 300 in response to the instruction of notification (SEQ409).

In this way, the wireless connection is established between the remote controller 200 and the main device 100, and the non-contact communication starts between the portable terminal 100 and the remote controller 200. Thereafter, the data transmission and reception is allowed between the portable terminal 100 and the main device 300 using the remote controller 200 as the intermediator.

After recognizing the transponder 204, the reader/writer 104 of the portable terminal 100 automatically performs the sequence of reading/writing the NDEF data in the transponder 204. For example, the reader/writer 104 transmits the command data (SEQ410).

In the remote controller 200, the transponder 204 transfers the command data received from the reader/writer 104 to the control unit 201 (SEQ411). Then, the control unit 201 instructs the wireless communication unit 205 to transmit the command data to the main device 300 (SEQ412), and the wireless communication unit 205 transmits the command data to the main device 300 through the wireless communication (SEQ413).

In the main device 300, when a command response data is generated for the command received by the wireless communication unit 303, the control unit 301 sends back the command response data to the remote controller 200 through the wireless communication by the wireless communication unit 303 (SEQ414).

In the remote controller 200, the wireless communication unit 205 transfers the received command response data to the control unit 201 (SEQ415). Then, the control unit 201 sets the command response data to the transponder 204 (SEQ416). The portable terminal 100 can read the response data set in the transponder 204 using the reader/writer 104 (SEQ417).

In addition, after setting the command response data to the transponder 204, the control unit 201 instructs the wireless communication unit 205 to notify the completion of the command response transmission to the main device 300 (SEQ418). Then, the wireless communication unit 205 transmits the notification of the transmission completion to the main device 300 through the wireless communication (SEQ419).

The communication system 1 according to this embodiment has a feature in that the reader/writer 104 is mounted on the portable terminal 100 and the transponder 204 is mounted on the remote controller 200 which operates the main device 300, and the portable terminal 100 and the main device 300 are paired with each other by a user's operation of holding up (or touching) the portable terminal 100 over the remote controller 200. In addition, when the portable terminal 100 fails in connection with the main device 300, an URL of a specific site where information on the failure is disclosed can be pushed by the transponder 204 (to be described below). However, a purpose or an application of the communication system 1 is not limited to the above description.

In addition, when the communication system 1 performs the communication sequence illustrated in Fig. 4, there are merits on (1) improvement in response, (2) reduction in communication time, and (3) suppression of communication error. Hereinafter, the respective merits will be described.

### (1) Improvement in Response

The remote controller 200 may perform a communication sequence of starting the wireless connection with the main device 300 after receiving the supplement command from the reader/writer 104. In this regard, like the exemplary communication sequence illustrated in Fig. 4, the wireless connection with the main device 300 starts by being triggered at the detection of the carrier wave from the reader/writer 104, so that it is possible to improve a response of the remote controller 200 to the portable terminal 100.

### (2) Reduction in Communication Time

In the remote controller 200, the initial value is set to the transponder 204 at the time when the wireless connection with the main device 300 is completed, the remote controller 200 enters a state of sending the command data to the main device 300 immediately after the non-contact communication between the reader/writer 104 and the transponder 204 starts (in other words, the portable terminal 100 is held up over the remote controller 200). In other words, when the portable terminal 100 is held up over the remote controller 200, there is no need for the user to care about a time taken for making the wireless connection with the main device 300.

### (3) Suppression of Communication Error

After the non-contact communication starts between the reader/writer 104 and the transponder 204, the wireless connection between the remote controller 200 and the main device 300 may be failed and thus the communication sequence may be stopped. In this regard, in the exemplary communication sequence illustrated in Fig. 4, the initial value is set to the transponder 204 at the time when the wireless connection with the main device 300 is completed, and the non-contact communication starts based on the establishment of the wireless connection. Therefore, it is possible to suppress an error caused by the wireless connection between the remote controller 200 and the main device 300 after the non-contact communication starts between the portable terminal 100 and the remote controller 200. When the wireless connection with the main device 300 is failed, the control unit 201 sets error information thereof to the transponder 204, so that the error information can be notified to the portable terminal 100 together with a response command to the command from the reader/writer 104.

As a method of notifying the error information, a response to the supplement command, a response of a fixed value, and a response of the data in conformity to an NFC format are exemplified.

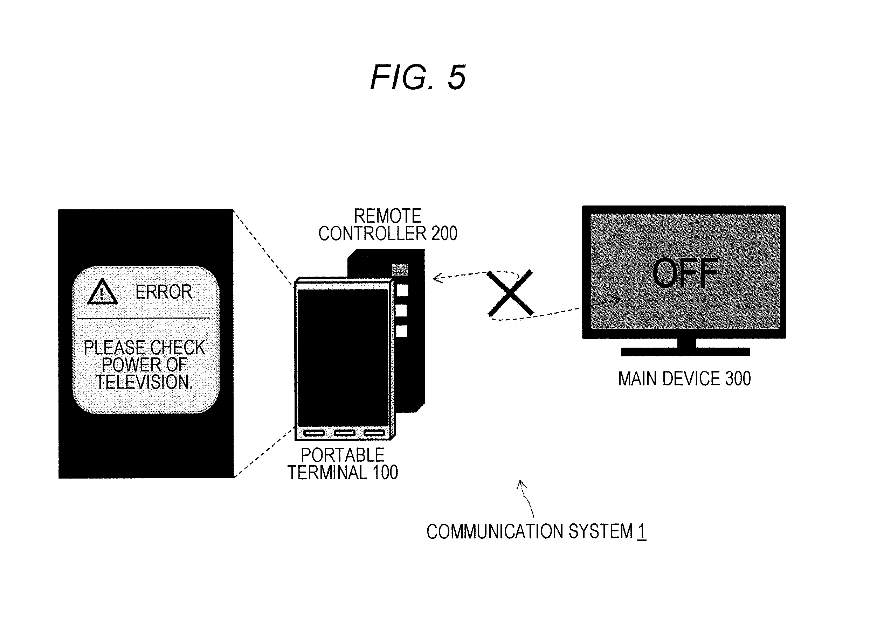

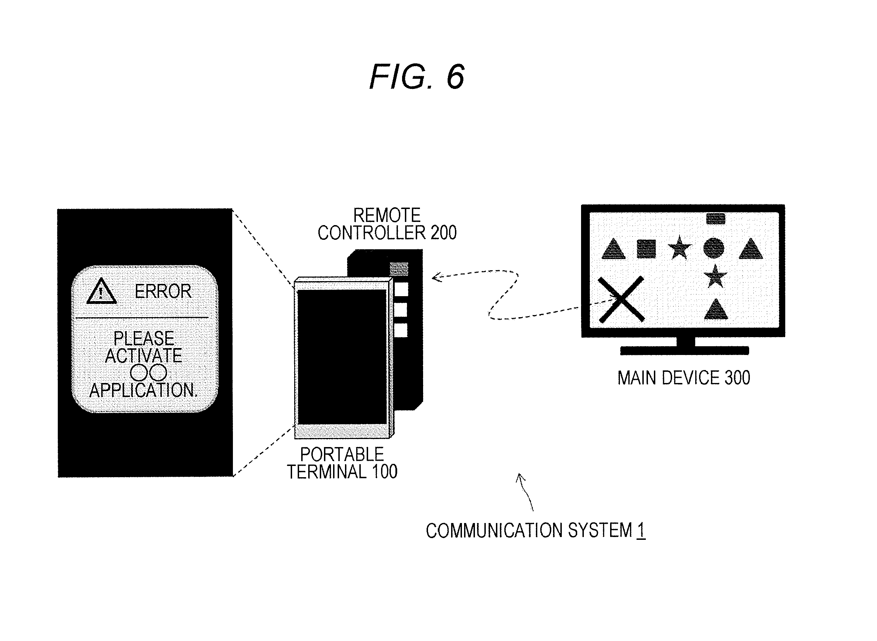

The portable terminal 100 which receives the error information displays the content of the error in the screen to prompt the user to make an operation to eliminate the error. For example, when the wireless connection is not possible to be established due to the power-off of the main device 300, the portable terminal 100 displays a message "Please check the power of the television. " in the screen to prompt the user to make an operation to turn on the power of the television serving as the main device 300 (see Fig. 5). In addition, when an error occurs because a desired application is not activated in the main device 300 at the time when a command is transmitted from the portable terminal 100, a message such as "Please activate the OO application." is displayed in the screen to prompt the user to make an operation to activate a desired application on the main device 300 (see Fig. 6).

In addition, when there is a failure such that the connection with the main device 300 is not possible, a URL (Uniform Resource Locator) tag of a specific site where information on the failure is disclosed may be set to the transponder 204 in the remote controller 200. When the user holds up the portable terminal 100 over the remote controller 200, the URL tag is read by the reader/writer 104 to prompt the user to browse the specific site.

In addition, it is possible to set an appropriate activation trigger of the application to the transponder 204 in the remote controller 200 according to a state of the main device 300, and notify the trigger to the portable terminal 100.

Two use cases based on the communication sequence illustrated in Fig. 4 of the communication system 1 will be introduced in the following.

Use case 1: The portable terminal is connected to a specific URL at the time when the connection is failed.

Sequence 1: The remote controller 200 starts to make connection with the main device in response to the transponder 204 which detects the carrier wave from the reader/writer 104.

Sequence 2 : When failing in the connection with the main device 300, the remote controller 200 prepares the NDEF data of a smart poster format.

Sequence 3: The remote controller 200 sets an initial value to the transponder 204.

Sequence 4: The transponder 204 responses to the supplement command from the reader/writer 104.

Sequence 5: The reader/writer 104 issues a READ command to read the NDEF data from the transponder 204.

Sequence 6: The portable terminal 100 operates according to the NDEF data of the smart poster format read by the reader/writer 104. For example, the portable terminal 100 performs connection to the URL described in the NDEF data.

Use case 2: Screen Mirroring

Sequence 1: The remote controller 200 starts to make connection with the main device in response to the transponder 204 which detects the carrier wave from the reader/writer 104.

Sequence 2: The remote controller 200 is successful in the connection with the main device 300, and sets the initial value to the transponder 204.

Sequence 3: The transponder 204 responses to the supplement command from the reader/writer 104.

Sequence 4: The reader/writer 104 issues a READ command to read the NDEF data from the transponder 204. At this time, a password and a P2P device address necessary for the connection between the portable terminal 100 and the main device 300 are exchanged through the transponder 204 of the remote controller 200.

Sequence 5: After reading the NDEF data by the reader/writer 104 through the transponder 204, the portable terminal 100 issues a WRITE command to write the NDEF data in the transponder 204. Specifically, the information necessary for the connection with the portable terminal 100 such as the device address of the portable terminal 100 is written to the transponder 204 and thus transferred to the main device 300.

Sequence 6: The connection between the portable terminal 100 and the main device 300 is completed.

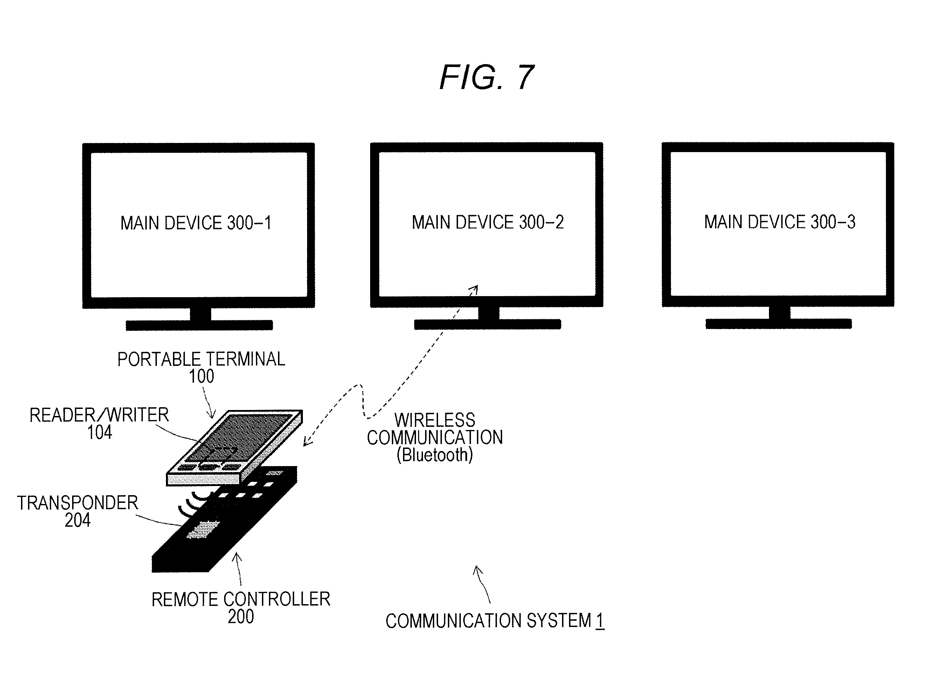

In the example illustrated in Fig. 1, there is one main device 300 as a control target to which a command is transmitted from the portable terminal 100. A case where the portable terminal 100 can control a plurality of devices is also considered. In such a case, as illustrated in Fig. 7, it is also considered a system operation in which the user selects one control target of main devices 300-1, 300-2, and so on using the remote controller 200 to make the wireless connection. Even in a case where a command is sent to any one of the main devices 300-1, 300-2, and so on, the user may hold up his/her portable terminal 100 over the remote controller 200. In addition, regardless of the number of main devices serving as the control targets, only one remote controller having the transponder function mounted thereon can operate the system.

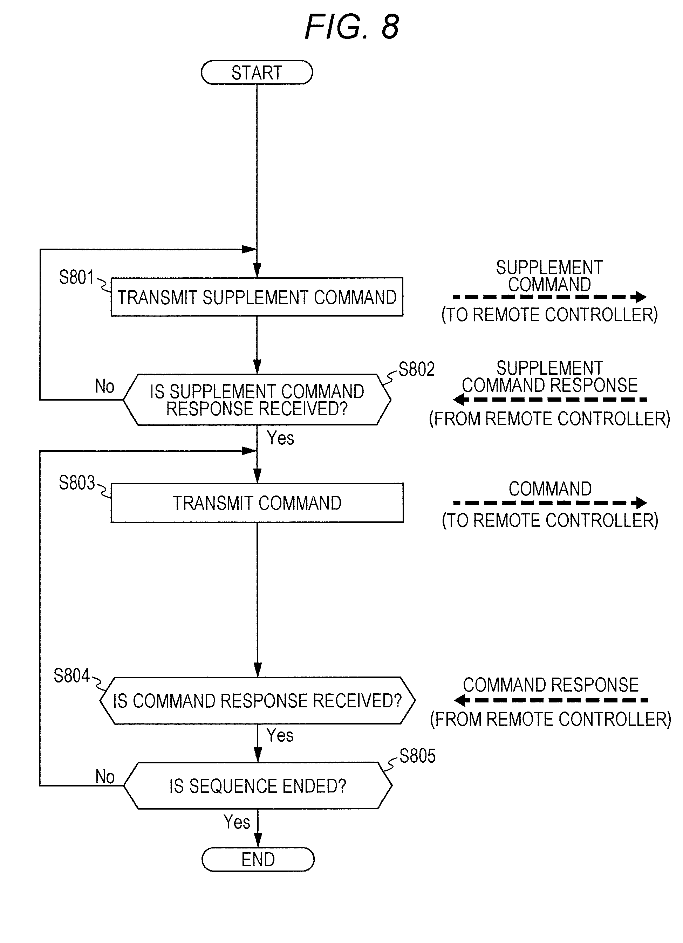

Fig. 8 illustrates a flowchart of a processing procedure of the portable terminal 100 having the reader/writer 104 mounted thereon in order to realize the communication sequence illustrated in Fig. 4. The processing procedure of the drawing, for example, is realized using a predetermined program code which is performed by the control unit 101.

While not illustrated in the drawing, the carrier wave is continuously sent from the reader/writer 104 in the section of this sequence. In addition, the portable terminal 100 continuously transmits the supplement command from the reader/writer 104 (Step S801) until the supplement command response is received (No in Step S802).

Then, when receiving the supplement command response from the transponder 204 of the remote controller 200 (Yes in Step S802), the reader/writer 104 of the portable terminal 100 recognizes the transponder 204, and the non-contact connection between the reader/writer 104 and the transponder 204 is established.

After recognizing the transponder 204, the reader/writer 104 automatically performs the sequence of reading/writing the NDEF data in the transponder 204. Herein, when the reader/writer 104 transmits the command data (Step S803), a command response is sent back from the transponder of the remote controller 200, and the reader/writer 104 receives the command response (Step S804). Thereafter, until the sequence is ended (No in Step S805), the portable terminal 100 repeatedly performs the command transmission and the command response reception with respect to the remote controller 200. When the sequence is ended (Yes in Step S805), the portable terminal 100 stops the transmission of the carrier wave from the reader/writer 104.

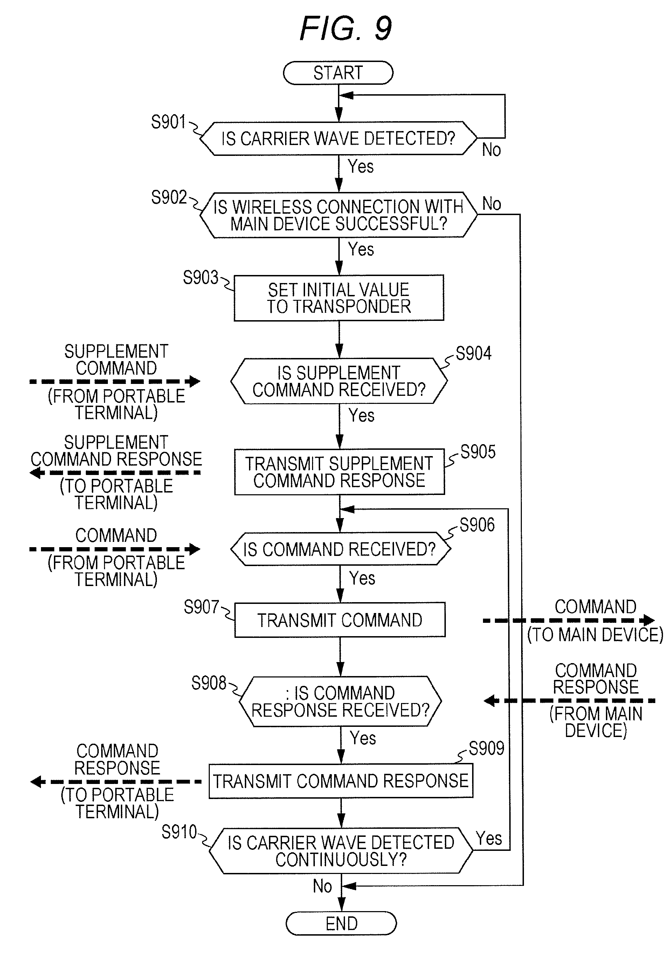

Fig. 9 illustrates a flowchart of a processing procedure of the remote controller 200 having the transponder 204 mounted thereon in order to realize the communication sequence illustrated in Fig. 4. The processing procedure of the drawing corresponds to the processing procedure of the portable terminal 100 illustrated in Fig. 8, and is realized using a predetermined program code which is performed by a the control unit 201, for example.

When the transponder 204 detects the carrier wave from the reader/writer 104 (Yes in Step S901), the remote controller 200 tests the wireless connection with the main device 300 using the wireless communication unit 205 (Step S902).

Herein, when failing in the wireless connection with the main device 300 (No in Step S902), the remote controller 200 skips all the subsequent processing steps, and ends this processing routine.

On the other hand, when being successful in the wireless connection with the main device 300 (Yes in Step S902), the control unit 201 sets the initial value parameter to the transponder 204 (Step S903).

When receiving the supplement command from the reader/writer 104 (Yes in Step S904), the transponder 204 to which the initial value parameter is set sends back the supplement command response together with the initial value parameter (Step S905). As a result, the non-contact communication between the reader/writer 104 and the transponder 204 is established. Further, the reception of the supplement command and the transmission of the supplement command response may be processed by any one of the transponder 204 and the control unit 201.

Thereafter, when the transponder 204 receives the command from the portable terminal 100 to the main device 300 (Yes in Step S906), the control unit 201 causes the wireless communication unit 205 to transmit the command to the main device 300 (Step S907). Then, when the wireless communication unit 205 receives the command response from the main device 300 (Yes in Step S908), the control unit 201 sets the command response data to the transponder 204 and transmits the data to the portable terminal 100 (Step S909).

During a period when the transponder 204 continuously detects the carrier wave from the reader/writer 104 (Yes in Step S910), the remote controller 200 repeatedly performs the transmission of the command from the portable terminal 100 to the main device 300 and the transmission of the command response from the main device 300 to the portable terminal 100 (that is, the intermediator between the portable terminal 100 and the main device 300). Then, when the transponder 204 does not detect the carrier wave (No in Step S910), the remote controller 200 ends this processing routine.

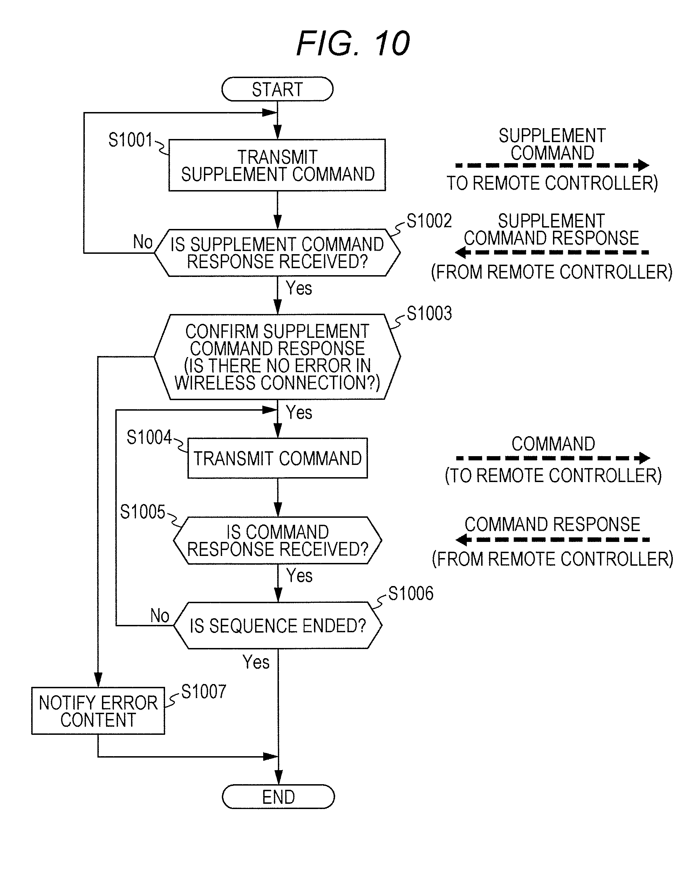

Fig. 10 illustrates a flowchart of another example of a processing procedure performed by the portable terminal 100. The processing procedure of the drawing is different from the processing procedure illustrated in Fig. 8 in that a process of notifying an error state of the wireless connection between the remote controller 200 and the main device 300 to the user of the portable terminal 100 is included.

While not illustrated in the drawing, the carrier wave is assumed to be continuously sent from the reader/writer 104 in the section of this sequence. In addition, until receiving the supplement command response (No in Step S1002), the reader/writer 104 of the portable terminal 100 continuously transmits the supplement command (Step S1001).

Then, when receiving the supplement command response from the transponder 204 of the remote controller 200 (Yes in Step S1002), the reader/writer 104 of the portable terminal 100 recognizes the transponder 204, and then automatically performs the sequence of reading/writing the NDEF data in the transponder 204. In addition, the reader/writer 104 of the portable terminal 100 confirms the content of the supplement response command response received from the transponder 204 to check whether an error occurs in the wireless connection between the remote controller 200 and the main device 300 (Step S1003).

As a result of the confirmation of the content of the supplement command response, when it is determined that the wireless connection is normally established between the remote controller 200 and the main device 300 (Yes in Step S1003), the reader/writer 104 automatically performs the sequence of reading/writing the NDEF data in the transponder 204, and transmits the command data to the transponder 204 (Step S1004). In addition, the reader/writer 104 of the portable terminal 100 receives the command response which is sent back from the transponder 204 by the remote controller 200 in response to the transmitted command (Step S1005). Thereafter, until the sequence is ended (No in Step S1006), the portable terminal 100 repeatedly performs the command transmission and the command response reception. When the sequence is ended (Yes in Step S1006), the portable terminal 100 stops even the transmission of the carrier wave from the reader/writer 104.

On the other hand, as a result of the confirmation of the content of the supplement command response, when an error occurs in the wireless connection between the remote controller 200 and the main device 300 (No in Step S1003), the portable terminal 100 displays the content of the error in the screen to notify the error to the user (Step S1007), and then ends this processing routine.

The user looks at the screen illustrated in Step S1007, and is prompted to make an operation to eliminate the error. For example, when the wireless connection is not possible to be established due to the power-off of the main device 300, a message such as "Please check the power of the television. " is displayed in the screen to prompt the user to make an operation to turn on the power of the television serving as the main device 300 (see Fig. 5). In addition, when an error occurs because a desired application is not activated in the main device 300 at the time when a command is transmitted from the portable terminal 100, a message such as "Please activate the OO application. " is displayed in the screen to prompt the user to make an operation to activate a desired application on the main device 300 (see Fig. 6).

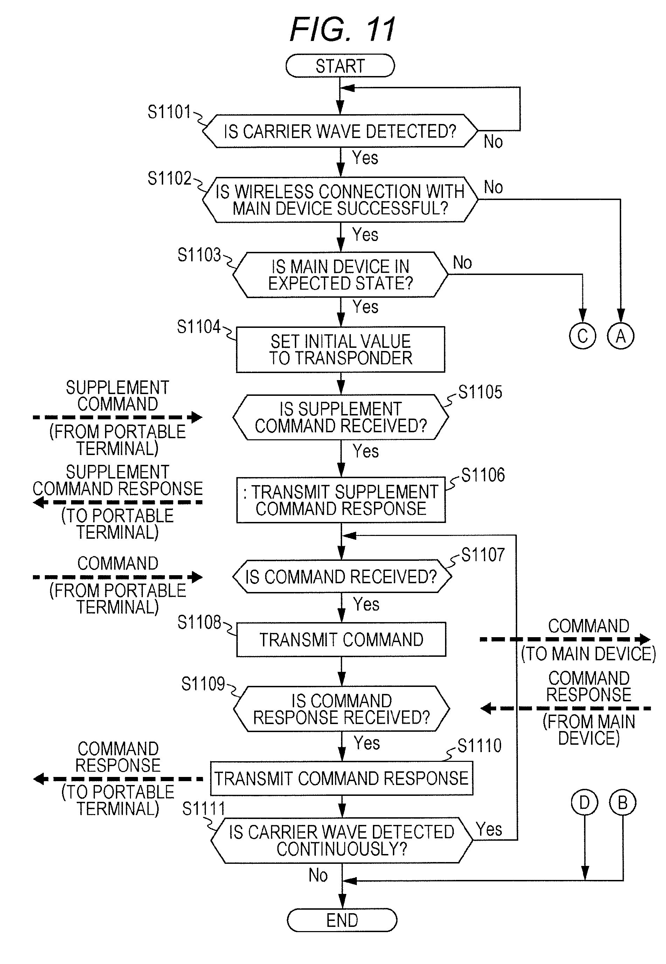

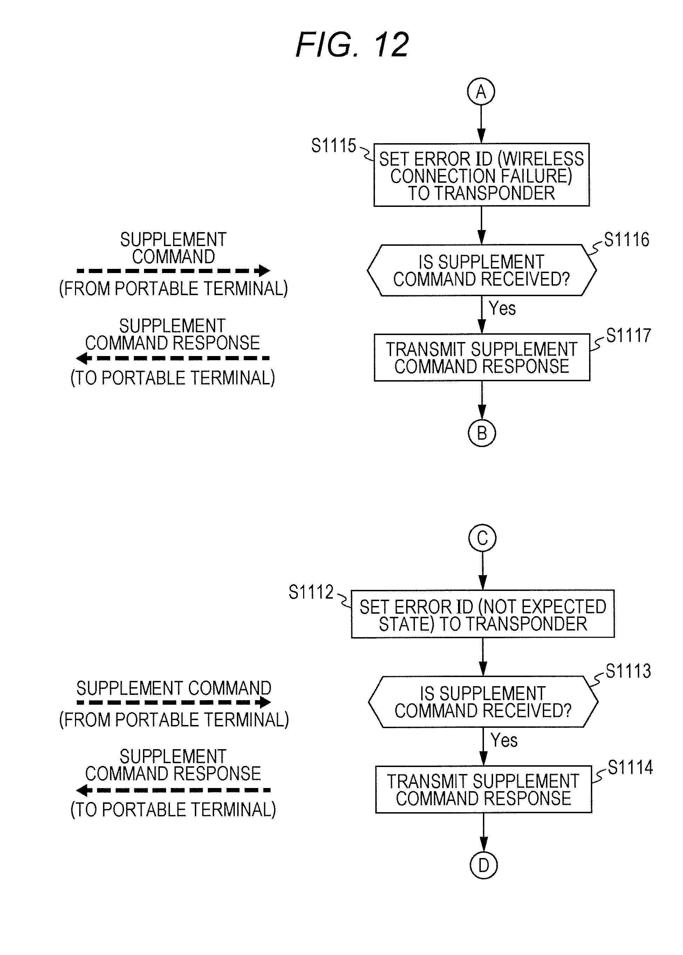

Figs. 11 and 12 illustrate another example of a processing procedure performed by the remote controller 200 in a flowchart, in correspondence with the processing procedure of the portable terminal 100 illustrated in Fig. 10. The processing procedures of the drawings are different from the processing procedure illustrated in Fig. 9 in that an error is assumed to occur in the wireless connection and a process of notifying an error state of the wireless connection between the remote controller 200 and the main device 300 to the portable terminal 100 is included.

When the transponder 204 detects the carrier wave from the reader/writer 104 (Yes in Step S1101), the remote controller 200 tests the wireless connection with the main device 300 by the wireless communication unit 205 (Step S1102).

Herein, when the wireless connection with the main device 300 is failed (No in Step S1102), the control unit 201 sets an error ID indicating that the wireless connection with the main device 300 is failed to the transponder 204 (Step S1115). Then, when receiving the supplement command from the reader/writer 104 (Yes in Step S1116), the transponder 204 sends back the supplement command response containing the set error ID (Step S1117), and ends this processing routine. The portable terminal 100 can confirm the content of the supplement command response, and confirm that the wireless connection between the remote controller 200 and the main device 300 is failed (described above).

On the other hand, when the wireless connection with the main device 300 is successful (Yes in Step S1102), the state of the main device 300 (for example, whether a desired application is activated) is confirmed (Step S1103). Then, when the main device 300 is not in a desired state (in which a desired application is activated) (No in Step S1103), the control unit 201 sets the error ID indicating that the state is not the desired state to the transponder 204 (Step S1112). Then, when receiving the supplement command from the reader/writer 104 (Yes in Step S1113), the transponder 204 sends back the supplement command response containing the set error ID (Step S1114), and ends this processing routine. In the portable terminal 100, the content of the supplement command response is confirmed, and thus it can be confirmed that the main device 300 is not in the desired state (described above).

In addition, when the main device 300 is in the desired state (Yes in Step S1103), the control unit 201 sets an initial value at a normal time to the transponder 204 (Step S1104). Then, when the supplement command is received from the reader/writer 104 (Yes in Step S1105), the transponder 204 sends back the supplement command response containing the set initial value (Step S1106). As a result, the connection of the non-contact communication between the reader/writer 104 and the transponder 204 is established. Further, the reception of the supplement command and the transmission of the supplement command response may be processed by any one of the transponder 204 and the control unit 201. In addition, the portable terminal 100 confirms the content of the received supplement command response, so that the wireless connection between the remote controller 200 and the main device 300 can be established. Further, it is possible to confirm that the main device 300 is in the desired state.

Thereafter, when the transponder 204 receives the command from the portable terminal 100 to the main device 300 (Yes in Step S1107), the command is transmitted from the wireless communication unit 205 to the main device 300 (Step S1108) . Then, when the command response is received from the main device 300 (Yes in Step S1109), the command response data is set to the transponder 204, and transmitted to the portable terminal 100 (Step S1110).

During a period when the transponder 204 continuously detects the carrier wave from the reader/writer 104 (Yes in Step S1111), the remote controller 200 repeatedly performs the transmission of the command from the portable terminal 100 to the main device 300 and the transmission of the command response from the main device 300 to the portable terminal 100 (that is, the operation as the intermediator between the portable terminal 100 and the main device 300). Then, when the transponder 204 does not detect the carrier wave (No in Step S1111), the remote controller 200 ends this processing routine.

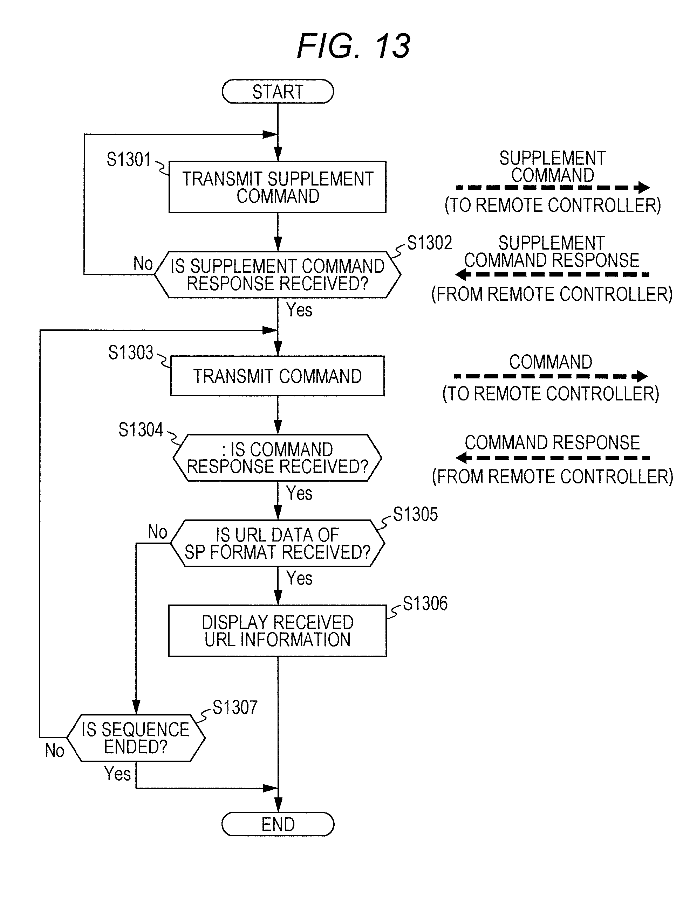

Fig. 13 illustrates a flowchart of another example of the processing procedure performed by the portable terminal 100. In the processing procedure of the drawing, the portable terminal 100 is different from the processing procedure illustrated in Fig. 8 in that the NDEF (NFC Data Exchange Format) data of the smart poster (SP) format is read.

While not illustrated in the drawing, it is assumed that the carrier wave is continuously sent from the reader/writer 104 in the section of this sequence. In addition, until receiving the supplement command response (No in Step S1302), the portable terminal 100 continuously transmits the supplement command from the reader/writer 104 (Step S1301).

Then, when receiving the supplement command response from the transponder 204 of the remote controller 200 (Yes in Step S1302), the reader/writer 104 of the portable terminal 100 recognizes the transponder 204 and the connection of the non-contact communication between the reader/writer 104 and the transponder 204 is established.

After the recognition of the transponder 204, the reader/writer 104 automatically performs the sequence of reading/writing the NDEF data in the transponder 204. Herein, when the reader/writer 104 transmits the command data (Step S1303), the command response is sent back from the transponder of the remote controller 200, and the reader/writer 104 receives the command response (Step S1304).

In Step S1304, the reader/writer 104 of the portable terminal 100 may transmit a NDEF read command. The remote controller 200 prepares URL data of the smart poster format to have access to a specific site disclosing information corresponding to a case where the wireless connection with the main device 300 is failed and a case where the main device 300 is not in the desired state, and can send back the corresponding URL data in response to the NDEF read command.

In a case where the URL data of the smart poster format is received in response to the NDEF read command (Yes in Step S1305), the portable terminal 100 displays the specific site according to the received URL information (Step S1306), and ends this processing routine. Since the portable terminal 100 operates according to the read NDEF data, a page corresponding to the state of the main device 300 can be displayed by performing the connection to the described URL, for example.

In addition, the portable terminal 100 repeatedly performs the command transmission and the command response reception until the sequence is ended (No in Step S1307) as long as the URL data of the smart poster format is received (No in Step S1305). When the sequence is ended (Yes in Step S1307), the portable terminal 100 stops the transmission of the carrier wave from the reader/writer 104.

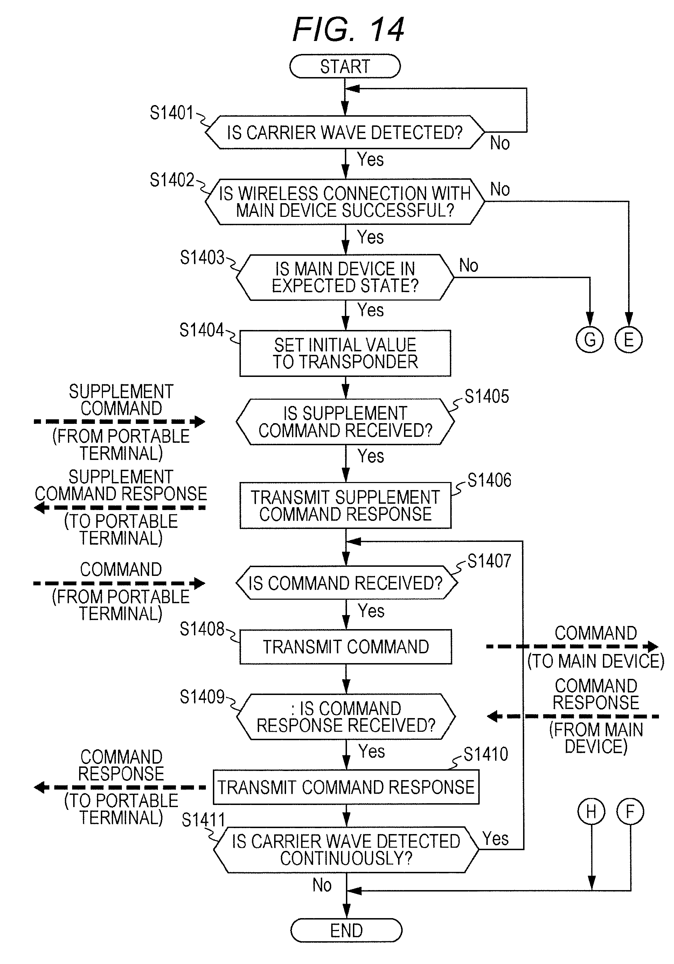

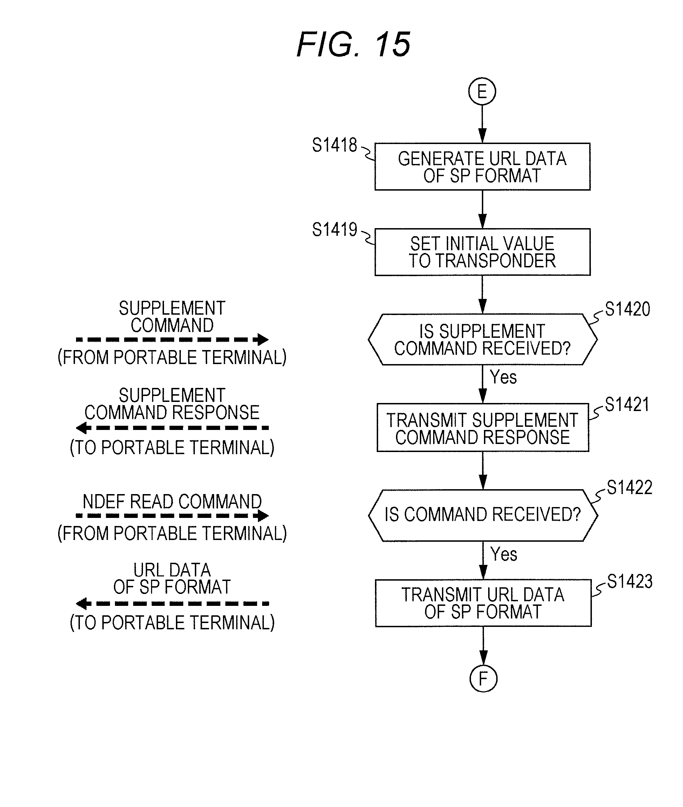

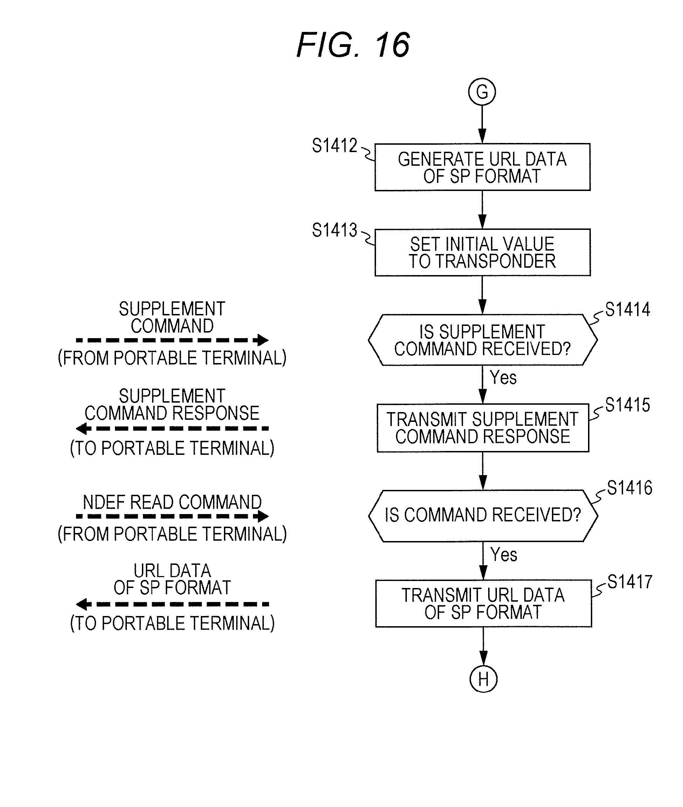

Figs. 14 to 16 illustrate flowcharts of another example of the processing procedure performed by the remote controller 200 in correspondence with the processing procedure of the portable terminal 100 illustrated in Fig. 13. The processing procedures of the drawings are different from the processing procedure illustrated in Fig. 9 in that the remote controller 200 transmits the URL data of the smart poster format in response to a NDEF read request.

When the transponder 204 detects the carrier wave from the reader/writer 104 (Yes in Step S1401), the remote controller 200 tests the wireless connection with the main device 300 by the wireless communication unit 205 (Step S1402).

Herein, when the wireless connection with the main device 300 is failed (No in Step S1402), the control unit 201 generates the URL data of the smart poster format corresponding to the failure in the wireless connection with the main device 300 (Step S1418). Inaddition, the control unit 201 sets an initial value at a normal time to the transponder 204 (Step S1419). Then, when the supplement command is received from the reader/writer 104 (Yes in Step S1420), the transponder 204 sends back the supplement command response containing the set initial value (Step S1421). Thereafter, when the NDEF read command is received from the portable terminal 100 (Step S1422), the URL data of the smart poster format generated in Step S1418 is transmitted from the transponder 204 to the portable terminal 100 (Step S1423), and this processing routine is completed.

On the other hand, when the wireless connection with the main device 300 is successful (Yes in Step S1402), the state of the main device 300 (for example, whether a desired application is activated) is confirmed (Step S1403). Then, when the main device 300 is not in a desired state (in which a desired application is activated) (No in Step S1403), the control unit 201 generates the URL data of the smart poster format indicating that the main device 300 is not in the desired state (Step S1412). In addition, the control unit 201 sets an initial value at a normal time to the transponder 204 (Step S1413). Then, when the supplement command is received from the reader/writer 104 (Yes in Step S1414), the transponder 204 sends back the supplement command response containing the set initial value (Step S1415). Thereafter, when the NDEF read command is received from the portable terminal 100 (Step S1417), the URL data of the smart poster format generated in Step S1412 is transmitted from the transponder 204 to the portable terminal 100 (Step S1418), and this processing routine is completed.

In addition, when the main device 300 is in the desired state (Yes in Step S1403), the control unit 201 sets the initial value at a normal time to the transponder 204 (Step S1404). Then, when the supplement command is received from the reader/writer 104 (Yes in Step S1405), the transponder 204 sends back the supplement command response containing the set initial value (Step S1406). As a result, the connection of the non-contact communication between the reader/writer 104 and the transponder 204 is established. Further, the reception of the supplement command and the transmission of the supplement command response may be processed by any one of the transponder 204 and the control unit 201.

Thereafter, when the transponder 204 receives the command from the portable terminal 100 to the main device 300 (Yes in Step S1407), the command is transmitted from the wireless communication unit 205 to the main device 300 (Step S1408). Then, when the wireless communication unit 205 receives the command response from the main device 300 (Yes in Step S1409), the control unit 201 sets the command response data to the transponder 204, and transmits the data to the portable terminal 100 (Step S1410).

During a period when the transponder 204 continuously detects the carrier wave from the reader/writer 104 (Yes in Step S1411), the remote controller 200 repeatedly performs the transmission of the command from the portable terminal 100 to the main device 300 and the transmission of the command response from the main device 300 to the portable terminal 100 (that is, the operation as the intermediator between the portable terminal 100 and the main device 300). Then, when the carrier wave is not detected (No in Step S1411), the remote controller 200 ends this processing routine.

Further, the technology disclosed in the present specification can also be configured as follows.
(1) An information processing apparatus including:
   a reader/writer configured to communicate with a transponder which is mounted on a remote controller of a main device; and
   a control unit configured to transmit a command addressed to the main device from the reader/writer to the transponder and cause the reader/writer to read the command response from the main device, the command response being set to the transponder.
(2) The information processing apparatus according to (1), further including a display unit,
   wherein the control unit causes the display unit to display information read from the transponder by the reader/writer.
(3) The information processing apparatus according to (2),
   wherein the control unit causes the display unit to display information on a connection state between the main device and the remote controller or an activation state of the main device, the information being set to the transponder.
(4) The information processing apparatus according to (2),
   wherein the control unit causes the display unit to display a specific site according to an URL disclosing information on a failure occurred between the main device and the remote controller or in the main device, the site being set to the transponder.
(5) An information processing method including:
   instructing a reader/writer to transmit a command addressed to the main device to a transponder on which a remote controller of a main device is mounted; and
   causing the reader/writer to read a command response from the main device, the command response being set to the transponder.
(6) A communication apparatus including:
   a transponder configured to communicate with a reader/writer which is mounted on an information processing apparatus;
   a main communication unit configured to communicate with a main device; and
   a control unit configured to cause the transponder to transmit a command, the command being transmitted from the reader/writer, from the main communication unit to the main device, and set a command response received from the main device by the main communication unit to the transponder.
(7) The communication apparatus according to (6),
   wherein the control unit instructs the main communication unit to be connected to the main device in response to the transponder which detects a carrier wave from the reader/writer.
(8) The communication apparatus according to (6),
   wherein the control unit instructs the transponder to make a response to the reader/writer at a time when the connection with the main device is established.
(9) The communication apparatus according to (6),
   wherein the control unit sets information on a connection state with respect to the main device or an activation state of the main device to the transponder.
(10) The communication apparatus according to (6),
   wherein the control unit sets URL information of a specific site which discloses information on connection with the main device or a failure generated in the main device to the transponder.
(11) A communication method including:
   transmitting a command, the command being transmitted from a reader/writer mounted on an information processing apparatus to a transponder, to a main device through a main body communication; and
   setting a command response, the command response being received from the main device through the main body communication, to the transponder.
(12) A communication system including:
   an information terminal configured to include a reader/writer;
   a main device; and
   a remote controller configured to be connected to the main device through a main body communication, and include a transponder which communicates with the reader/writer.
(13) A computer-readable program for causing a computer to execute:
   instructing a reader/writer to transmit a command addressed to the main device to a transponder on which a remote controller of a main device is mounted; and
   causing the reader/writer to read a command response from the main device, the command response being set to the transponder.
(14) A computer-readable program for causing a computer to execute:
   transmitting a command, the command being transmitted from a reader/writer mounted on an information processing apparatus to a transponder, to a main device through a main body communication; and
   setting a command response, the command response being received from the main device through the main body communication, to the transponder.

### INDUSTRIAL APPLICABILITY

Hitherto, the technology disclosed in the present specification has been described in detail with reference to the specific embodiments. However, it is apparent that a person skilled in the art can make changes and substitutions in a scope not departing from the spirit of the technology disclosed in the present specification.

In the present specification, the embodiments have been described about the portable terminal such as a smart phone which is assumed as a device having the reader/writer mounted thereon. However, the invention is not limited to the portable terminal, and an information processing apparatus may be employed as long as its weight and size are suitable for the user to carry with. In such a case, the remote controller may be held up over the information processing apparatus without holding up the information processing apparatus over the remote controller. In addition, a control-target main device which transmits a command from the portable terminal is not limited to the television, but various types of CE devices can be exemplified in addition to an audio reproducing apparatus. In addition,the non-contact communication system performed between the portable terminal and the remote controller is not limited to the NFC.

In short, the technology disclosed in the present specification has been described in a form of embodiment, but the content described in the present specification is not interpreted in a limited way. The spirit of the technology disclosed in the present specification should be determined in consideration of claims.

### REFERENCE SIGNS LIST

- 1: Communication system
- 100: Portable terminal
- 101: Control unit
- 102: Memory
- 103: User input/output unit
- 104: Reader/writer
- 200: Remote controller
- 201: Control unit
- 202: Memory
- 203: Operation input unit
- 204: Transponder
- 205: Wireless communication unit
- 300: Main device
- 301: Control unit
- 302: Memory
- 303: Wireless communication unit
- 31: Processor
- 32: Antenna resonance circuit
- 33: Antenna resonance circuit
- 34: Load switching modulation circuit
- 35: Processor

## Claims

1. A communication apparatus comprising:
a transponder configured to communicate with a reader/writer which is mounted on an information processing apparatus;
a main communication unit configured to communicate with a main device; and
a control unit configured to cause the transponder to transmit a command, the command being transmitted from the reader/writer, from the main communication unit to the main device, and set a command response received from the main device by the main communication unit to the transponder.

2. The communication apparatus according to claim 1,
wherein the control unit instructs the main communication unit to be connected to the main device in response to the transponder which detects a carrier wave from the reader/writer.

3. The communication apparatus according to claim 1,
wherein the control unit instructs the transponder to make a response to the reader/writer at a time when the connection with the main device is established.

4. The communication apparatus according to claim 1,
wherein the control unit sets information on a connection state with respect to the main device or an activation state of the main device to the transponder.

5. The communication apparatus according to claim 1,
wherein the control unit sets URL information of a specific site which discloses information on connection with the main device or a failure generated in the main device to the transponder.

6. A communication method comprising:
transmitting a command, the command being transmitted from a reader/writer mounted on an information processing apparatus to a transponder, to a main device through a main body communication; and
setting a command response, the command response being received from the main device through the main body communication, to the transponder.

7. A communication system comprising:
an information terminal configured to include a reader/writer;
a main device; and
a remote controller configured to be connected to the main device through a main body communication, and include a transponder which communicates with the reader/writer.

8. A computer-readable program for causing a computer to execute:
transmitting a command, the command being transmitted from a reader/writer mounted on an information processing apparatus to a transponder, to a main device through a main body communication; and
setting a command response, the command response being received from the main device through the main body communication, to the transponder.
